# EUROPÄISCHE PATENTSCHRIFT

(11) **EP 3 427 592 B1**
(45) Veröffentlichungstag und Bekanntmachung des Hinweises auf die Patenterteilung: **27.03.2024**
(21) Anmeldenummer: 17180618.5
(22) Anmeldetag: 10.07.2017
(51) Int. Cl.: A21D 13/16, A21D 2/16, A23C 15/12

(54) **BUTTER**
BUTTER
BEURRE

(43) Veröffentlichungstag der Anmeldung: 16.01.2019
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 2 826 380
- DE-A1- 19 707 406
- US-A- 2 357 896
- US-A1- 2007 298 143
- Anonymous: "Lemon & Chilli Butter Product Description", GNPD database, Record ID 3463293, 30. November 2015 (2015-11-30), Seiten 1-2, XP055402402, Gefunden im Internet: URL:http://www.gnpd.com/sinatra/recordpage /3463293/ [gefunden am 2017-08-30]
- Anonymous: "Porcini Mushroom Butter Product Description", GNPD database, Record ID 3372421, 30. September 2015 (2015-09-30), Seiten 1-4, XP055402405, Gefunden im Internet: URL:http://www.gnpd.com/sinatra/recordpage /3372421/ [gefunden am 2017-08-30]
- Anonymous: "Rindertalg in der Butter", Der Spiegel, 1. Januar 2001 (2001-01-01), Seiten 1-1, XP055402770, Germany Gefunden im Internet: URL:http://magazin.spiegel.de/EpubDelivery /spiegel/pdf/18578724 [gefunden am 2017-08-31]

## Beschreibung

### GEBIET DER ERFINDUNG

Die Erfindung befindet sich auf dem Gebiet der Milchprodukte und betrifft eine neue zweiphasige Buttermischung, ein Verfahren zu Ihrer Herstellung, ihre Verwendung zur Herstellung von speziellen Backwaren und die entsprechenden Backwaren.

### STAND DER TECHNIK

Zu den beliebtesten Backwaren gehören der Blätterteig und ähnliche Produkte wie etwa Croissants oder Plunder.

Blätterteig (auch *Feuilletage)* ist ein mehrlagiger Ziehteig. In den Grundteig aus Mehl, Salz und Wasser, wird durch mehrfaches Ausrollen und Zusammenschlagen Butter, seltener auch ein anderes Ziehfett wie Margarine, eingearbeitet, was als "Tourieren" bezeichnet wird.

Während des Backens geht der Teig locker und blättrig auf. Durch die Backhitze verdampft das im Teig vorhandene Wasser, dehnt sich dabei aus und hebt das Gebäck an. Die Fettschichten wirken wie eine Sperre, sie lassen den Dampf nicht durch und halten ihn in der Teigschicht, bis das Teiggerüst stabil gebacken ist. Das Aufgehen (die Volumenvergrößerung) des Teiges wird dabei nur durch den im Teig entstehenden Wasserdampf, nicht durch zusätzliche Triebmittel oder Hefe hervorgerufen. Daher wird diese Herstellungsart "physikalische Lockerung" genannt.

Blätterteig ist, abhängig vom Eigengeschmack der verwendeten Fette, weitgehend geschmacksneutral und wird ohne Zuckerzusatz hergestellt. Dadurch eignet er sich sowohl für süße als auch für herzhafte Gebäcke.

Man unterscheidet Blätterteige nach der Art, nach der die Butter bzw. das Fett eingearbeitet wird:

*Deutscher Blätterteig:* hierbei liegen die Fettschichten innen, der Grundteig umschließt ihn (enthält nach den Leitsätzen für Feine Backwaren des deutschen Lebensmittelbuches mindestens 62 Kilogramm Butter, Milchfetterzeugnisse oder Margarine oder praktisch wasserfreie Fette, bezogen auf 100 Kilogramm Getreideerzeugnisse)'

*Französischer Blätterteig:* hier umschließen die Fettschichten den Grundteig. Der Vorteil besteht darin, dass der Teig nicht austrocknen oder verkrusten kann, weil die Fettschicht außen liegt;

*Holländischer Blätterteig:* hier das Fett wird würfelförmig (kühl) in den Teig gearbeitet, ohne Ruhepausen touriert (daher auch: *Blitzblätterteig* genannt) und vor allem zu Blätterteigböden verarbeitet, da er nicht so gut aufgeht (hochzieht).

Backen portioniert. Holländischer Blätterteig nimmt durch seine kompakte Struktur eine Sonderstellung ein, denn das Gebäck kann nach dem Backen geschnitten werden. Durch diese Kompaktheit sind die Teige für spezielle Gebäcke, wie Prasselkuchen, Tortenböden, Tortendecken, gut geeignet.

Der Unterschied zwischen Blätterteig und anderen tourierten Gebäcken wie Plunder oder auch Croissants liegt vor allem im Teig. Dem Blätterteig wird keine Hefe zugegeben, im Plunder kommt zusätzlich Hefe als Triebmittel zum Einsatz. Außerdem enthalten die Teige, je nach Bedarf und Rezept, Zucker, Milch und weitere Zutaten. Der in der türkischen, griechischen und arabischen Küche verbreitete ebenfalls tourierte Yufka-, Fyllo- oder Masoukateig ist dem Blätterteig sehr ähnlich. Es sind auch Abwandlungen mit Öl oder Hefe bekannt.

Wichtig ist, dass das fertige Gebäck einerseits nicht unmittelbar nach Butter oder Fett schmeckt, andererseits aber einen buttrigen Gesamteindruck - sowohl optisch wie geschmacklich - hinterlässt, da dies von Verbrauchern als Qualitätsmerkmal angesehen wird.

Das Marktsegment, in dem Blätterteigbackwaren beheimatet sind, ist sehr homogen und lässt kaum Produktvielfalt zu. Über den Verkaufserfolg entscheiden allein Qualität und Preis. Dabei besteht seitens der Verbraucher sehr wohl Interesse an solchen Backwaren, die über zusätzliche sensorische oder geschmackliche Eigenschaften verfügen. Diese sind jedoch in der Auswahl übersichtlich: in der Regel handelt es sich um Croissants oder ähnliches, denen man nachträglich einen Kern aus Schokoladencreme oder Marmelade injiziert hat. Ursächlich ist hier, dass die Herstellung der Produkte praktisch ausschließlich maschinell erfolgt, da es einer millimetergenauen Ausrichtung der Ausrollwalzen bedarf, um einen homogenen Teig und nach dem Abbacken auch ein qualitativ hochwertiges Produkt herzustellen. Für diese Abläufe eignet sich das Einarbeiten weiterer Zutaten, die auch noch den Backprozess überstehen müssen, nur sehr bedingt, wenn überhaupt.

US2007/298143 offenbart die Herstellung von Blätterteigwaren, wobei der laminierte Teig aus Schichten von Teig und Fett oder Backfett bestehend aus: festem Fett (hydrogeniertes Pflanzenöl), festen Fett kombiniert mit Wasser (z.B. Margarine), Butter, Tierfett (Rindertag oder Schmalz) oder Kombinationen davon. Bevorzugt wird Butter verwendet. US2357896 offenbart eine Buttermischung aus 90% Butter (Schmelzpunkt ca. 32°C, 80-90% Fettgehalt) mit 10% Baumwollsamenöl-Sterain (Schmelzpunkt ca 57°C, fast 100% Fettgehalt) das in mikrokristalliner Phase vorliegt.

Der vorliegenden Erfindung liegt indes genau diese Aufgabe zugrunde, nämlich Backwaren, speziell Blätterteigprodukte bzw. entsprechende Backrohlinge zur Verfügung zu stellen, die keine weiteren Zutaten außer dem Grundteig und Butter enthalten und dennoch über neue und ungewöhnliche sensorische oder geschmackliche Eigenschaften verfügen.

### BESCHREIBUNG DER ERFINDUNG

Ein erster Gegenstand der Erfindung betrifft Butter, die zu mindestens 80 Prozent aus Milchfett besteht und aus Milch von Kühen gewonnen wird, enthaltend oder bestehend aus
(a) eine(r) ersten Butterphase mit einem Fettgehalt von weniger als 90 Gew.-% und
(b) eine(r) zweiten Butterphase mit einem Fettgehalt von mindestens 90 Gew%,
und einem Schmelzpunkt von mindestens 45 °C,wobei die beiden Butterphasen in ein, zwei oder mehreren Schichten übereinander angeordnet sind, und wobei sich die fettärmere Phase unten und die fettreichere Phase darüber befindet, und die beiden Butterphasen im Gewichtsverhältnis 40:60 bis 60:40 vorliegen.

Überraschenderweise wurde nämlich gefunden, dass Butter, die sich aus zwei Phasen unterschiedlichen Fettgehaltes zusammensetzt, gegenüber einer einphasigen Standardbutter deutliche Vorteile aufweist, weil sich je nach Fettgehalt in den beiden Phasen in dem verzehrfähigen Endprodukt andere geschmackliche bzw. sensorische Eigenschaften einstellen.

### BUTTERPHASEN

Butter ist ein meist aus dem Rahm von Milch hergestelltes Streichfett, das nach EU-Verordnung zu mindestens 80 Prozent aus Milchfett besteht. Beim Butterungsprozess wird der Rahm geschlagen. Dadurch werden die Fettkügelchen des Milchfetts zerstört. Die Fetthülle bricht auf und das enthaltene Fett tritt aus. Jetzt kann sich das Fett untereinander verkleben. Dabei werden Teile der Fetthüllen, Wasser und etwas Milcheiweiß eingeschlossen. Aus der flüssigen Fett-in-Wasser-Emulsion wird eine feste Wasser-in-Fett-Emulsion. Der mit Abstand größte Teil dieser fettfreien Komponenten (Milchserum) tritt als Buttermilch aus. Die Butter selbst wird schließlich zu einer homogenen, geschmeidigen Masse geknetet, die anschließend geformt und abgepackt wird.

Im Sinne der vorliegenden Erfindung weist die erste Butterphase vorzugsweise einen Fettgehalt im Bereich von etwa 82 bis etwa 88 Gew.-% und insbesondere etwa 84 bis etwa 86 Gew.-% auf.

Ebenfalls bevorzugt ist, wenn die zweite Butterphase einen Fettgehalt im Bereich von 90 bis etwa 96 Gew.-% und insbesondere etwa 92 bis etwa 94 Gew.-% aufweist.

Weiterhin bevorzugt ist, dass die erste und/oder die zweite Butterphase einen Gehalt an fettfreier Trockenmasse (FFTM) im Bereich von 1 bis 3 Gew.-% und vorzugsweise etwa 2 Gew.-% aufweist. Die Mengen an Fett und Trockenmasse ergänzen sich jeweils zu 100 %, wobei die Wassermenge 16 Gew.-% nicht überschreiten darf, da es sich ansonsten nicht mehr um eine Butter gemäß EU-verordnung handelt.

Das sensorische Erlebnis der neuen Butter wird durch den Schmelzpunkt der fettreicheren zweiten Butterphase maßgeblich beeinflusst:
Weist die die zweite Butterphase einen Schmelzpunkt von mindestens 45 °C und vorzugsweise von etwa 46 bis etwa 50 °C auf, zeichnen sich die resultierenden Backwaren durch einen festeren Biss aus.

Weist die die zweite Butterphase jedoch einen Schmelzpunkt von weniger als 45 °C und vorzugsweise von etwa 36 bis etwa 40 °C auf, stellt sich beim Verzehr der resultierenden Backwaren ein kühlender Effekt ein.

Die Herstellung der geschichteten Butter kann insbesondere in einem kontinuierlichen Verfahren erfolgen, das beispielsweise die folgenden Schritte umfasst:
(i) Bereitstellen einer ersten Butterphase (a),
(ii) Bereitstellen einer zweiten Butterphase (b),
(iii) flächiges Ablegen der ersten Butterphase (a) auf einer Vorlage,
(iv) Belegen der ersten Butterphase (a) mit der zweiten Butterphase (b).

### GEWERBLICHE ANWENDBARKEIT

Ein weiterer Gegenstand der Erfindung betrifft Backwarenrohlinge, umfassend oder bestehend aus
(a) einer Teigphase und
(b) der erfindungsgemäß geschichteten Butter

Bei der Teigphase handelt es sich vorzugsweise um einen Standard-Blätterteig, wie eingangs beschrieben.

Ein weiterer Gegenstand der Erfindung betrifft ein Verfahren zur Herstellung von Backwaren, vorzugsweise Croissants, umfassend die folgenden Schritte:
(i) Bereitstellen einer Teigphase;
(ii) Bereitstellen einer geschichteten Butter wie oben beschrieben,
(iii) Belegen der Teigphase mit der geschichteten Butter unter Erhalt eines Backwarenrohlings;
(iv) Abbacken des Rohlings.

Alternativ kann der Rohling vor dem Abbacken auch mehrfach gefaltet werden, so dass eine Schichtstruktur erhalten wird, wie sie für Blätterteig üblich ist.

Schließlich umfasst die vorliegende Erfindung auch noch die Verwendung der geschichteten Butter wie oben beschrieben zur Herstellung von Backwaren, insbesondere Blätterteigbackwaren und besonders bevorzugt von Croissants.

### BEISPIELE

### BEISPIELE 1 UND 2, VERGLEICHSBEISPIEL V1

Es wurden zwei Buttermassen mit folgender Zusammensetzung hergestellt, wobei die beiden Phasen zu gleicher Stärke ausgerollt und Phase (B) auf Phase (A) aufgebracht wurde **(Tabelle 1).** Die Phase (A) entsprach dabei einer Standard-Industriebutter.

**Tabelle 1**

| Butterzusammensetzung | | | | | | |
|---|---|---|---|---|---|---|
| **Bsp.** | **Phase** | **Menge [Gew.-%]** | **Fett [Gew.-%]** | **Smp. [°C]** | **FFTM [Gew.-%]** | **Wasser [Gew.-%]** |
| 1 | A | 50 | 82 | | 2 | 16 |
| | B | 50 | 92 | 48 | 2 | 6 |
| 2 | A | 50 | 82 | | 2 | 16 |
| | B | 50 | 94 | 38 | 2 | 4 |

Die Buttermassen wurden dünn ausgelegt auf einen Standard-Blätterteig aufgebracht und dieser in 27 Touren gelegt so dass eine Schichtstruktur entstand. Anschließend wurde der Rohling abgebacken und von einem Panel bestehend aus zehn erfahrenen Testern gegen ein Vergleichsprodukt verkostet, bei dem die Butterung des Teigs nur mit einer gewichtsgleichen Menge an Industriebutter erfolgt war (Beispiel V1). Die Ergebnisse sind in Tabelle 2 wiedergegeben; die Bewertung erfolgte auf der Skala (5) = sehr ausgeprägt bis (1) = kaum zu bemerken.

**Tabelle 2**

| Sensorisch/geschmackliche Beurteilung | | |
|---|---|---|
| **Produkt** | **Bissfestigkeit** | **Kühlender Effekt** |
| 1 | 4,5 | 1,5 |
| 2 | 2,0 | 3,5 |
| V1 | 2,0 | 1,5 |

Die Beispiele und das Vergleichsbeispiel zeigen, dass die Verwendung der neuen zweiphasigen Butter tatsächlich eine Änderung in der sensorischen/geschmacklichen Wahrnehmung erzielt wird, ohne dass dazu weitere Stoffe zugesetzt werden müssten.

## Patentansprüche

1. Butter, die zu mindestens 80 Prozent aus Milchfett besteht und aus Milch von Kühen gewonnen wird, enthaltend oder bestehend aus
(a) eine(r) ersten Butterphase mit einem Fettgehalt von weniger als 90 Gew.-% und
(b) eine(r) zweiten Butterphase mit einem Fettgehalt von mindestens 90 Gew.-% und einem Schmelzpunkt von mindestens 45 °C,
wobei die beiden Butterphasen in ein, zwei oder mehreren Schichten übereinander angeordnet sind, und wobei sich die fettärmere Phase unten und die fettreichere Phase darüber befindet, und die beiden Butterphasen im Gewichtsverhältnis 40:60 bis 60:40 vorliegen.

2. Butter nach Anspruch 1, **dadurch gekennzeichnet, dass** die erste Butterphase einen Fettgehalt im Bereich von etwa 82 bis etwa 88 Gew.-% aufweist.

3. Butter nach den Ansprüchen 1 und/oder 2, **dadurch gekennzeichnet, dass** die zweite Butterphase einen Fettgehalt im Bereich von 90 bis etwa 96 Gew.-% aufweist.

4. Butter nach mindestens einem der Ansprüche 1 bis 3, **dadurch gekennzeichnet, dass** die erste und/oder die zweite Butterphase einen Gehalt an fettfreier Trockenmasse im Bereich von 1 bis 3 Gew.-% aufweist.

5. Butter nach mindestens einem der Ansprüche 1 bis 4, **dadurch gekennzeichnet, dass** die zweite Butterphase einen Schmelzpunkt von 46 bis 50 °C aufweist.

6. Verfahren zur Herstellung einer geschichteten Butter nach Anspruch 1, umfassend die folgenden Schritte:
(i) Bereitstellen einer ersten Butterphase (a),
(ii) Bereitstellen einer zweiten Butterphase (b),
(iii) flächiges Ablegen der ersten Butterphase (a) auf einer Vorlage,
(iv) Belegen der ersten Butterphase (a) mit der zweiten Butterphase (b)

7. Backwarenrohling, umfassend oder bestehend aus
(a) einer Teigphase und
(b) einer geschichteten Butter nach Anspruch 1.

8. Backwarenrohling nach Anspruch 7, **dadurch gekennzeichnet, dass** die Teigphase ein Standard-Blätterteig ist.

9. Verfahren zur Herstellung von Backwaren, umfassend die folgenden Schritte:
(i) Bereitstellen einer Teigphase;
(ii) Bereitstellen einer geschichteten Butter nach mindestens einem der Ansprüche 1 bis 5;
(iii) Belegen der Teigphase mit der geschichteten Butter unter Erhalt eines Backwarenrohlings;
(iv) Abbacken des Rohlings.

10. Verwendung einer geschichteten Butter nach Anspruch 1 zur Herstellung von Backwaren, insbesondere Blätterteigbackwaren.

## Claims

1. Butter consisting of at least 80 per cent milk fat and obtained from milk of cows, comprising or consisting of
(a) a first butter phase having a fat content of less than 90% by weight, and
(b) a second butter phase having a fat content of at least 90% by weight and a melting point of at least 45 °C,
wherein the two butter phases are arranged in one, two, or more layers on top of one another, and wherein the lower-fat phase is at the bottom and the higher-fat phase is at the top, and the both butter phases are present in the weight ratio of 40:60 to 60:40.

2. Butter according to claim 1, wherein the first butter phase has a fat content of about 82 to about 88% by weight.

3. Butter according to claim 1 and/or 2, wherein the second butter phase has a fat content of 90 to about 96% by weight.

4. Butter according to at least one of claims 1 to 3, wherein the first and/or the second butter phase has a content of fat-free dry matter within the range of 1 to 3% by weight.

5. The butter according to at least one of claims 1 to 4, wherein the second butter phase has a melting point of 46 to 50°C.

6. A process for the production of a layered butter according to claim 1, comprising the following steps:
(i) providing a first butter phase (a),
(ii) providing a second butter phase (b),
(iii) placing the first butter phase (a) planely onto a tray, and
(iv) layering the first butter phase (a) onto the second butter phase (b).

7. A bake-off product, comprising or consisting of
(a) a dough phase, and
(b) a layered butter according to claim 1.

8. The bake-off product according to claim 7, wherein the dough phase is a standard puff pastry dough.

9. A process for the production of baked goods, comprising the following steps:
(i) providing a dough phase;
(ii) providing a layered butter according to at least one of claims 1 to 5;
(iii) placing the layered butter onto the dough phase, obtaining a bake-off product; and
(iv) baking the bake-off product.

10. Use of a butter according to claim 1 for the production of baked goods, in particular puff pastry bakery goods.

## Revendications

1. Beurre, qui est constitué à raison d'au moins 80% de matière grasse du lait et obtenu à partir de lait de vache, contenant ou constitué par
(a) une première phase de beurre présentant une teneur en graisse inférieure à 90% en poids et
(b) une deuxième phase de beurre présentant une teneur en graisse d'au moins 90% en poids et un point de fusion d'au moins 45°C,
les deux phases de beurre étant agencées dans une, deux couches ou plus, les unes au-dessus des autres et la phase plus pauvre en graisse se trouvant en dessous et la phase plus riche en graisse se trouvant sur celle-ci et les deux phases de beurre se trouvant dans un rapport en poids de 40:60 à 60:40.

2. Beurre selon la revendication 1, **caractérisé en ce que** la première phase de beurre présente une teneur en graisse dans la plage d'environ 82 à environ 88% en poids.

3. Beure selon les revendications 1 et/ou 2, **caractérisé en ce que** la deuxième phase de beurre présente une teneur en graisse dans la plage d'environ 90 à environ 96% en poids.

4. Beurre selon au moins l'une des revendications 1 à 3, **caractérisé en ce que** la première et/ou la deuxième phase de beurre présente(nt) une teneur en matière sèche exempte de graisse dans la plage de 1 à 3% en poids.

5. Beurre selon au moins l'une des revendications 1 à 4, **caractérisé en ce que** la deuxième phase de beurre présente un point de fusion de 46 à 50°C.

6. Procédé pour la préparation d'un beurre stratifié selon la revendication 1, comprenant les étapes suivantes :
(i) mise à disposition d'une première phase de beurre (a),
(ii) mise à disposition d'une deuxième phase de beurre (b),
(iii) dépôt à plat de la première phase de beurre (a) sur un gabarit,
(iv) garnissage de la première phase de beurre (a) par la deuxième phase de beurre (b).

7. Appareil de pâtisserie, comprenant ou constitué par
(a) une phase de pâte et
(b) un beurre stratifié selon la revendication 1.

8. Appareil de pâtisserie selon la revendication 7, **caractérisé en ce que** la phase de pâte est une pâte feuilletée standard.

9. Procédé pour la préparation de pâtisseries, comprenant les étapes suivantes :
(i) mise à disposition d'une phase de pâte ;
(ii) mise à disposition d'un beurre stratifié selon au moins l'une des revendications 1 à 5 ;
(iii) garnissage de la phase de pâte par le beurre stratifié avec obtention d'un appareil de pâtisserie ;
(iv) cuisson de l'appareil.

10. Utilisation d'un beurre stratifié selon la revendication 1 pour la préparation de pâtisseries, en particulier de pâtisseries en pâte feuilletée.
